# EUROPEAN PATENT APPLICATION

(11) **EP 1 727 140 A1**
(43) Date of publication of application: **29.11.2006**
(21) Application number: 06001349.7
(22) Date of filing: 23.01.2006
(51) Int. Cl.: G11B 9/14, G11C 11/15, G11B 9/04

(54) **Magnetic recording apparatus using magnetization reversal by spin injection with thermal assistance**

(30) Priority: 25.05.2005 JP 2005151771
(71) Applicant: Hitachi, Ltd., Tokyo 100-8280 (JP)
(72) Inventor: Onogi, Toshiyuki Hitachi, Ltd. IP Office, Chiyoda-ku Tokyo 100-8220 (JP); Saitoh, Kazuo Hitachi, Ltd. IP Office, Chiyoda-ku Tokyo 100-8220 (JP)
(74) Representative: Strehl Schübel-Hopf & Partner

(57) **Abstract**

The present invention provides a high density magnetic recording apparatus capable of performing a magnetic write to a magnetic memory cell therein by directly applying current into the memory cell without using external magnetic field; and performing a record read from the cell structure. To reduce the current density required for magnetization reversal by spin injection, the magnetic recording medium is irradiated with laser light so as to heat a magnetic memory cell to a temperature higher than the room temperature but lower than the Curie temperature. While the coercivity of the magnetic recording medium is effectively lowered, magnetic write operation is performed by applying external current into the magnetic memory cell.

## Description

### FIELD OF THE INVENTION

The present invention relates to a high density magnetic recording apparatus where the magnetic recording cell uses a magnetoresistive effect element having a sandwich stack structure composed of a ferromagnetic layer, a nonmagnetic layer and a ferromagnetic layer.

### BACKGROUND OF THE INVENTION

In conventional hard disk drives (HDDs) and magnetic random access memories (MRAMs), magnetic recording or writing is done by external magnetic field reversal. In the external magnetization reversal method, a current is forced to flow along a line disposed near a magnetic recording medium. The magnetic field generated by the current is used as an external magnetic field. A record write operation to a specific magnetic memory cell in the magnetic recording medium is done by applying this external magnetic field to the magnetic memory cell so as to reverse the magnetic orientation of its ferromagnetic layer (free layer) whose magnetic orientation is not fixed.

Also in HDD magnetic heads and MRAMs, a record read operation from a magnetic memory cell is done by utilizing a magnetoresistive effect a ferromagnetic metal multi-layered film exhibits. Generally, the magnetoresistive effect is a physical phenomenon in which a magnetic body changes its electric resistance when subjected to a magnetic field. The giant magnetoresistive effect element (GMR element), which utilizes the giant magnetoresistive (GMR) effect discovered in a ferromagnetic metal/non-magnetic metal/ferromagnetic metal multi-layered structure, is already used for magnetic read heads in HDDs. Its application to the MRAM device, a new type of non-volatile memory, has recently begun to be considered, too. In addition, the tunneling magnetoresistive effect (TMR) element has recently been picked out. Comprising a insulating layer sandwiched by two ferromagnetic,layers, the TMR element utilizes the tunneling current which flows between the ferromagnetic layers across the tunneling junction or a ferromagnetic tunneling junction. Applicability of this TMR element to magnetic heads and magnetoresistive effect memories is rising since its magnetoresistance is higher than that of the GMR element (for example, Non-Patent Document 1: Appl. Phys. 79, 4724 (1996)).

Recently, the spin-injection magnetization reversal method is proposed. Differing in principle from the external magnetization reversal method, this method has attracted substantial attention. In this spin-injection magnetization reversal method, a current is directly applied to a magnetic memory cell to reverse the magnetization of the ferromagnetic substance by the effect of spins of passing electrons. For example, proof-of-principle experiments have been conducted on the spin-injection magnetization reversal phenomenon in Co/Cu/Co stacked GMR elements (for example, Non-Patent Document 2: Phys. Rev. Lett. 84, 3149 (2000)). If a current is applied to a GMR element so that the current perpendicularly passes through its metal layer, a spin-polarized current is injected from the Co ferromagnetic layer (pinned layer) whose magnetic orientation is pinned into the Co ferromagnetic layer (free layer) whose magnetic orientation is not pinned. With no external magnetic fields generated by line currents, this spin current can reverse the magnetic orientation of the free layer since spin torque force occurs in the free layer due to the spin current.

[Non-Patent Document 1] J. Appl. Phys. 79, 4724 (1996)

[Non-Patent Document 2] Phys. Rev. Lett. 84, 3149 (2000)

### SUMMARY OF THE INVENTION

If the above mentioned external magnetization reversal method is used in a high density magnetic recording apparatus such as a HDD or MRAM, a magnetic field generated by line currents (external magnetic field) acts on the ferromagnetic material as a spatially spreading non-local field. Therefore, a switching magnetic field (external magnetic field needed for magnetization reversal) generated for a specific memory cell acts also on adjacent plural memory cells. With the progress of magnetic memory cells in miniaturization and integration, this problem becomes more serious, making it very difficult to write to individual magnetic recording bits. In addition, as each magnetic memory cell is made smaller, the switching magnetic field must be boosted by increasing the write line current. To implement a higher density/capacity HDD or MRAM, increase in the power consumption is therefore inevitable. In addition, raising the line current may bring about the problem of melting lines.

By contrast, the spin-injection magnetization reversal method advantageously does not have influence on other memory cells since spin torque force occurs only in a region where spin current is flowing. This may provide an effective magnetic recording means in high density magnetic recording apparatus. In the spin-injection magnetization reversal method, however, a large amount of current must be applied. In the case of a typical GMR element, the density of current needed for magnetization reversal (critical current density) is as high as 10⁷ A/cm². This not only increases the power consumption but also raise the possibility of lines being degenerated/disabling due to electromigration. To put the spin-injection magnetization reversal method to practical use, it is considered essential to reduce this critical current density by one or two digits (to the order of 10⁵⁻⁶ A/cm²). In addition, if the TMR element is used as the magnetic memory cell for MRAM, the critical current can not be obtained as a normal current since the current flowing through the TMR element is a tunnel current. The TMR element has a problem that increasing the applied current may cause dielectric breakdown in the insulating layer and substantially lower the high magnetoresistance ratio of the TMR element.

Thus, although the spin-injection magnetization reversal method, which controls magnetization by using spin current instead of external magnetic field, is superior in local controllability, its practical application to high density magnetic recording apparatus is difficult since the current density needed for magnetization reversal is high.

Accordingly, it is an object of the present invention to provide a high density magnetic recording apparatus capable of performing a magnetic write to a magnetic memory cell therein by directly applying current into the memory cell without using external magnetic field; and performing a record read from the cell structure, characterized in that means of reducing the current density required for the spin-injection magnetization reversal is included.

With laser light, an element of the magnetic recording medium is heated to a temperature higher than the room temperature but lower than the Curie temperature so as to effectively lower the coercivity of the magnetic recording medium. Magnetic write operation is performed by applying external current locally into that heated magnetic memory cell of the magnetic recording medium. Each magnetic memory cell uses a magnetoresistive effect element having a conventional ferromagnetic layer/non-magnetic layer/ferromagnetic layer sandwich type stack structure. Record write operation to a magnetic memory cell is performed by controlling the magnetic orientation of the magnetic memory cell with only external current without using external magnetic field. For read operation, the magnetic orientation is read by using the magnetoresistive effect as conventionally.

### BRIEF DESCRIPTION OF THE DRAWINGS

Fig. 1 shows a cross sectional view of a first embodiment of the present invention.
Fig. 2 shows a result of analyzing (calculating) how the current-swept magnetic hysteresis loop of a Co/Cu/Co stacked GMR element depends on the temperature (T).
Fig. 3 shows a cross sectional view of a second embodiment of the present invention.
Fig. 4 shows an example of a solid memory which uses the magnetic memory cell disclosed in Fig. 3.
Fig. 5 shows a cross sectional view of a third embodiment of the present invention.
Fig. 6 shows the geometry of a metal film which covers an optical fiber, a component of a probe included in a forth embodiment of the present invention.
Fig. 7 shows the geometry of a metal film which covers an optical fiber, a component of a probe included in a fifth embodiment of the present invention.

### DESCRIPTION OF THE PREFERRED EMBODIMENT

In a magnetic recording apparatus of the present invention, magnetization reversal by spin injection is thermally assisted. Since the current density (critical current density) required for magnetization reversal can be reduced remarkably and magnetic memory cells are easier to miniaturize and integrate, higher density magnetic recording is possible than existing ones. In addition, since the critical current density is reduced, it is possible to provide a magnetic recording apparatus which consumes less power and comprises more durable memory cells.

### (Embodiment 1)

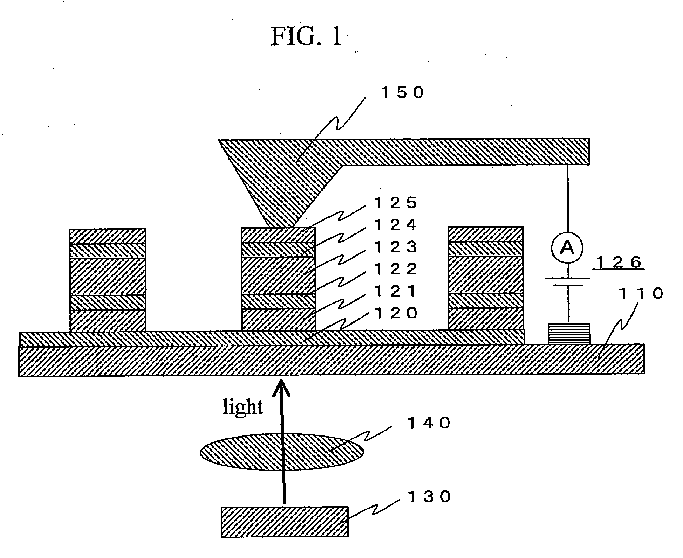

Fig. 1 (cross section diagram) discloses a first embodiment of the present invention. On an electrode 120 composed of a metal film formed on a surface of a transparent glass substrate 110, a GMR element structure composed of a ferromagnetic metal layer (magnetization free layer) 121, a non-magnetic metal layer 122 and a ferromagnetic layer (magnetization fixed layer) 123 is formed. Further, on the GMR element, an antiferromagnetic metal layer (magnetization pinning layer) 124 to pin the magnetic orientation of the ferromagnetic layer 123 and a metal electrode 125 are formed. The layers 121 through 123 function as one magnetic memory cell. A magnetic recording apparatus has many such magnetic memory cells arrayed on the substrate. If the coercivity of the magnetization fixed layer 123 is enough large to stably maintain its magnetic orientation, the magnetization pinning layer 124 is not necessarily required.

Toward the back side of the above-mentioned substrate 110, a semiconductor laser 130 and an object lens 140 are set so that light generated from the semiconductor laser is gathered to a specific memory cell via the object lens. This locally heats the memory cell and therefore lowers the coercivity of the magnetization free layer. Under this condition, a conductive metal probe 150 is made in electrical contact with the metal electrode 125 formed on top of the memory cell including the GMR element. A current is applied to the metal probe from a power supply 126 to perform a record write operation by reversing the magnetization of the magnetization free layer. This memory cell is repeated as a two-dimensional array on the substrate. By relatively moving the metal probe 150 on the substrate 110, it is possible to perform a write operation to an arbitrary memory cell. On the other hand, recorded information (magnetic orientation) can be read from the memory cell according to the GMR element's change in resistance in the same manner as a magnetic read head in a HDD.

The magnetic memory cell structure disclosed in Fig. 1 was fabricated by using common processing technologies for magnetic materials. An optically transparent glass plate (SiO2) is used as the substrate 110. Firstly, a metal film 120 (Au) with a uniform thickness of 10 nm was deposited on the substrate 110 by using a typical sputtering or molecular beam epitaxy (MBE) system. Then, a 2 nm thick magnetization free layer 121 (CoFe), a 5 nm thick non-magnetic metal layer 122 (Cu), a 10 nm thick magnetization fixed layer 123 (CoFe), a 3 nm thick antiferromagnetic layer 124 (MnIr) to pin the magnetic orientation of the magnetization fixed layer, and a 5 nm thick metal electrode 125 (Au) are stacked up in this order. Then, micro-fabrication technology was applied to the uniformly deposited films 121 - 125. Namely, an electron beam lithography or ion milling system was used to form a square array of a number of 20 nm x 20 nm wide pillar memory cell structures arranged at intervals of 20 nm. The conductive probe 150 is made of tungsten (W). Using the conductive mode of an atomic force microscope (AFM), the probe set on the cantilever was positioned three-dimensionally.

By operating the AFM to detect the height profile of the substrate across the memory cell array formed thereon from changes in the atomic force, the upper metal electrode (convex) 125 of a memory cell was selected for magnetic write. By controlling the cantilever, the conductive probe 150 was made in electrical contact with the electrode 125. Further, the selected memory cell was heated by irradiating laser light to it from the back side of the substrate.

The laser light source 130 is a semiconductor laser (blue-violet, wavelength 405 nm) for use in ordinary optical magnetic recording apparatus. From the light source, laser light is irradiated to the memory cell via the object lens 40 or a SIL (Solid Immersion Lens)having higher condensing performance so that the memory cell, one of those constituting the memory cell array on the substrate, was heated to 600°C as measured with a thermal couple. With the memory cell heated, a current of 50 µA was applied from the current source 126 to the electrode 125 which was in contact with the conductive probe 150. Consequently, the magnetic orientation of the magnetization free layer 121 reversed due to spin torque force, becoming parallel to the magnetic orientation of the magnetization fixed layer. Further, by applying a reverse bias current (50µA), we could reverse the magnetic orientation of the magnetization free layer again to align the orientation antiparallel to the magnetic orientation of the magnetization fixed layer. This allows magnetic write operation. When the memory cell was not heated by laser light, the lowest magnitude of current required for magnetization reversal by spin injection was 250 µA. Thus, we could lower the critical current magnitude required for magnetization reversal to a fifth by the thermal assist effect of laser light.

The magnetic orientation of the magnetization free layer relative to that of the magnetization fixed layer can also be detected from a change in the electrical resistance of the GMR element in the memory cell. After the irradiation of laser light, we measured the electrical resistance of the memory cell. While the resistance was high (500 Q) in the case of antiparallel magnetization, it showed a low resistance (400 Q) in the case of parallel magnetization, making it possible to read recorded magnetic information from the change in the electrical resistance of the memory cell.

Not limited to SiO₂, the substrate 110 may be made of any material if it can transmit laser light to heat a memory cell. Likewise, the magnetization free layer and magnetization fixed layer may be made of another ferromagnetic material such as crystalline cobalt (Co) or Permalloy (NiFe) which is typically used to form GMR elements. Furthermore, the functional part of each memory cell, namely the GMR element may be replaced by a TMR element having a ferromagnet/insulator/ferromagnet trilayer structure.

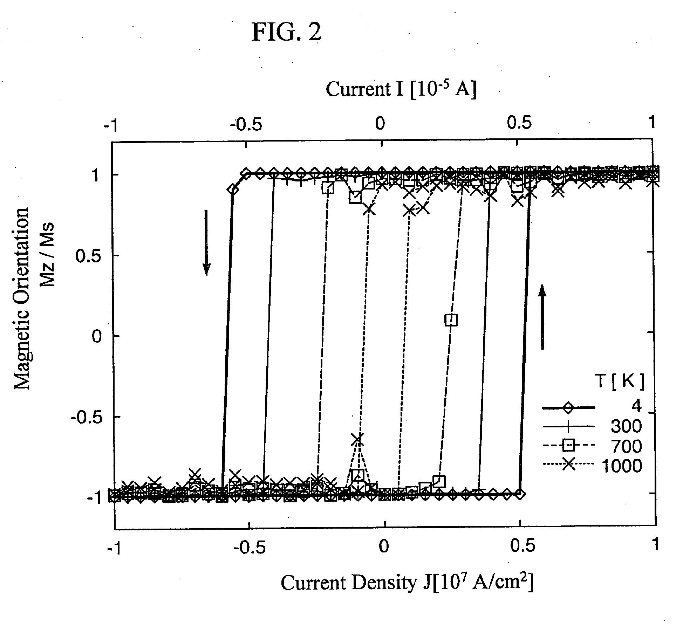

Fig. 2 shows a result of analyzing (calculating) how the current-swept magnetic hysteresis loop of a Co/Cu/Co stacked GMR element depends on the temperature (T). Here, the magnetization free layer which is a Co ferromagnetic layer is 10 nm x 10 nm wide and 1 nm thick. As shown, the magnetic orientation of the Co magnetization free layer sharply changes depending on the current I passing through the GMR element. As well, the magnetic orientation reverses at a positive/negative threshold current density (critical current density). Further, as the temperature is raised just below the Curie temperature (about 1400 K) at which the ferromagnetism disappears, the magnitude of this critical current density decreases to about a tenth. This may be because the coercivity of the Co magnet is lowered due to thermal activation according as the temperature is raised. This means that magnetization reversal in a GMR element by spin injection can be done with a smaller amount of current if the magnetization reversal is thermally assisted by locally heating the memory cell.

In the conventional optical magnetic recording method, a magnetic recording cell of a magnetic recording medium is locally irradiated with laser light to heat the magnetic recording cell to the Curie temperature or higher so as to induce a ferromagnetic to paramagnetic phase transition. Magnetic recording is done by applying an external magnetic field while the cell is in the paramagnetic phase. The cell retains the magnetization as it cools down. This method has a disadvantage that power is much consumed by the laser since the magnetic recording medium must be heated to the Curie temperature or higher. In addition, this optical magnetic recording method is required to selectively focus the laser light on a very small magnetic recording bit. It is difficult to make the size of the laser beam spot smaller than the wavelength of the light while proving a sufficient level of heating optical power. Accordingly, this optical magnetic recording method is difficult to allow magnetic recording apparatus to realize high recording densities beyond 100 Gbits/in².

In the case of the present invention, magnetization reversal involved in magnetic write to a specific memory cell relies on the current which passes through the GMR element in the memory cell. As apparent from Fig. 2, magnetization reversal occurs only in the target memory cell even if plural cells are irradiated and heated with the laser beam since no current is flowing in the other cells. Therefore, the laser beam spot is allowed to be larger than the distance between memory cells although several memory cells are heated at the same time. In addition, since it is not necessary to heat the magnetic recording medium to its Curie temperature or higher, the optical power of the laser required for magnetization reversal may be reduced.

### (Embodiment 2)

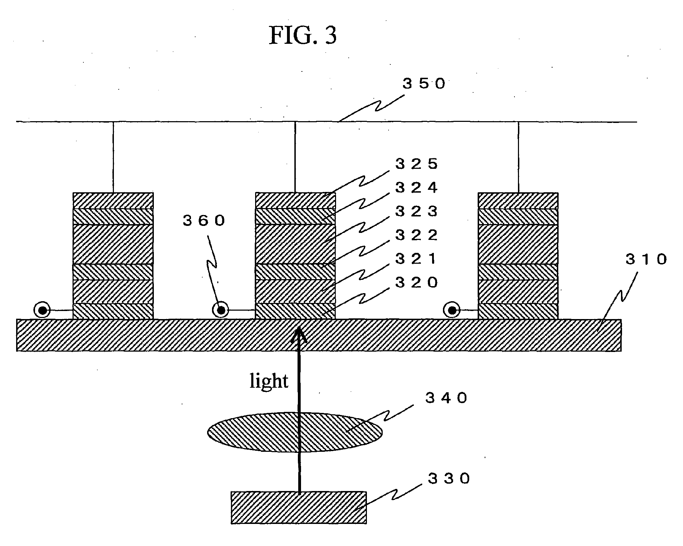

Fig. 3 (cross section diagram) discloses a second embodiment of the present invention. On an electrode 320 formed on a surface of a transparent glass substrate 310, a GMR element structure composed of a ferromagnetic metal layer (magnetization free layer) 321, a non-magnetic metal layer 322 and a ferromagnetic layer (magnetization fixed layer) 323 is formed. Further, on the GMR element, an antiferromagnetic metal layer (magnetization pinning layer) 324 to pin the magnetic orientation of the ferromagnetic layer 123 and a metal electrode 325 are formed. The layers 321 through 323 function as one magnetic memory cell. A magnetic recording apparatus has many such magnetic memory cells arrayed on the substrate. If the coercivity of the magnetization fixed layer 323 is enough large to stably retain its magnetic orientation, the magnetization pinning layer 324 is not necessarily required.

Toward the back side of the above-mentioned substrate, a semiconductor laser 330 and an object lens 340 are set so that light generated from the semiconductor laser is gathered to a specific memory cell via the object lens. This locally heats the memory cell and therefore lowers the coercivity of the magnetization free layer. Under this condition, a memory cell is selected by a bit line 350 connected to its upper metal electrode 325 and by a word line (orthogonal to the bit line) 360 connected to its lower electrode 320. A current is applied to the selected memory cell containing a GMR element to perform a magnetic record write there. Recorded information (magnetic orientation) can be read from the memory cell according to the GMR element's change in resistance in the same manner as a magnetic read head in a HDD.

The magnetic memory cell structure disclosed in Fig. 3 was fabricated by following the same process for the aforementioned embodiment 1. An optically transparent glass plate (SiO₂) is used as the substrate 310. Firstly, a metal film 320 (Au) with a uniform thickness of 10 nm was deposited on the substrate 310 by using a typical sputtering or molecular beam epitaxy (MBE) system. Then, a 2 nm thick magnetization free layer 321 (CoFe), a 5 nm thick non-magnetic metal layer 322 (Cu), a 10 nm thick magnetization fixed layer 323 (CoFe), a 3 nm thick antiferromagnetic layer 324 (MnIr) to pin the magnetic orientation of the magnetization fixed layer, and a 5 nm thick metal electrode 325 (Au) are stacked up in this order. Then, micro-fabrication technology was applied to the uniformly deposited films 320 - 325. Namely, an electron beam lithography or ion milling system was used to form a square array of a number of 20 nm x 20 nm wide pillar memory cell structures arranged at intervals of 20 nm. Further, bit lines are respectively connected to the upper electrodes 325 of memory cells in a column. Likewise, word lines 360 are respectively connected to the lower electrodes 320 of memory cells in a row to fabricate a MRAM.

By following the same process for the first embodiment, light generated from the semiconductor laser 330 was gathered to a specific memory cell via the object lens 340 to irradiate and heat the memory cell. A current (50 µA) was driven to pass through the memory cell selected by a bit line 350 and a word line 360. We could perform substantially the same write operation with substantially the same result as the first embodiment. Read operation was also performed by detecting a change in the electrical resistance of the memory cell selected by the bit line 350 and word line 360. The realized magnetic recording device using spin injection with thermal assist showed substantially the same characteristics as the first embodiment.

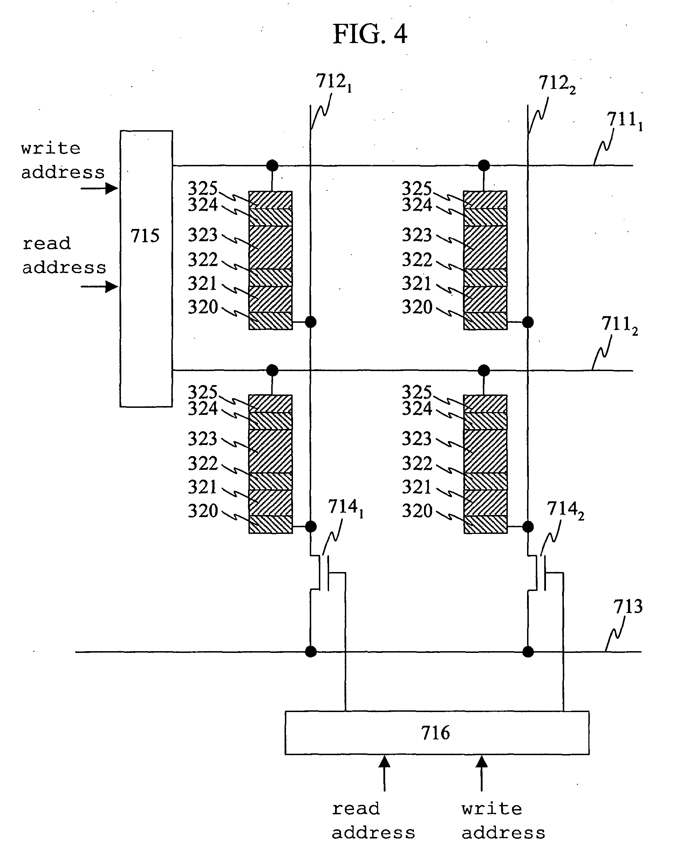

Then, Fig. 4 shows an example of a solid memory which uses the magnetic memory cell disclosed in Fig. 3. The solid memory of Fig. 4 has magnetic memory cells arranged as a X-Y matrix of two columns by two rows. In Fig. 4, a magnetic memory cell as shown in Fig. 3 is placed each of the points where bit lines 711₁ and 711₂ respectively go across word lines 712₁ and 712₂. 715 refers to a bit line decoder while 716 refers to a word line decoder. According to a write or read address specified, the decoders 715 and 716 select one bit line and one word line to flow a current through a magnetic memory cell. The word lines are selectively connected to a data line 713 by opening/closing the gates of MOS-FETs 714.

For example, by supplying a current of 10⁶A/cm² between the bit line 711₁ and the word line 712₁ connected selectively to the data line 713, the magnetic orientation of the magnetization free layer 321 in Fig. 4 is reversed or retained. That is, write is done by changing the magnetic orientation of the magnetization free layer 321 in Fig. 3. On the other hand, read is done by applying a voltage between, for example, the bit line 711₁ and the word line 712₁ connected selectively to the data line 713 and detecting the resistance which depends on the magnetic orientation of the magnetization free layer 323 relative to that of the magnetization fixed layer 321 in Fig. 3.

### (Embodiment 3)

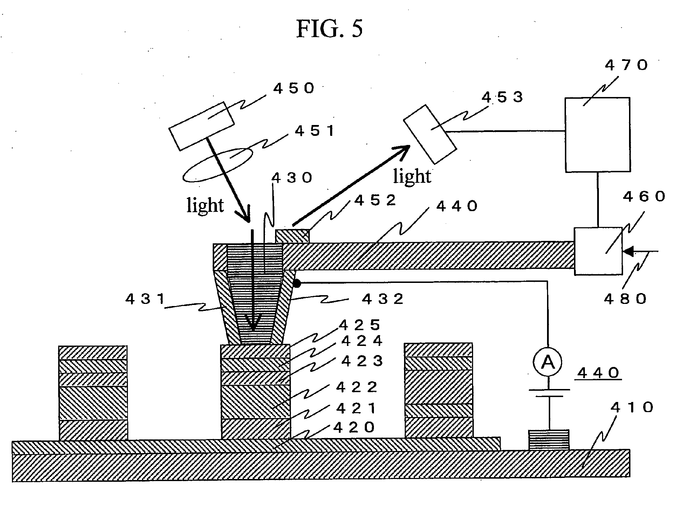

Fig. 5 (cross section diagram) discloses a third embodiment of the present invention. On an electrode 420 formed on a surface of a non-magnetic substrate 410, an antiferromagnetic metal layer (magnetization pinning layer) 421, a trilayer GMR element structure composed of a ferromagnetic metal layer (magnetization fixed layer) 422, a non-magnetic metal layer 423 and a ferromagnetic layer (magnetization free layer) 424, and then a metal electrode 425 are formed. The layers 422 through 424 function as one magnetic memory cell. A magnetic recording apparatus has many such magnetic memory cells arrayed on the substrate. If the coercivity of the magnetization fixed layer is enough large to stably retain its magnetic orientation, the magnetization pinning layer 421 is not necessarily required.

With reference to Fig. 5, means to supply a current to a magnetic memory cell while heating it is described below. A probe-shaped optical fiber (hereinafter denoted as the probe) 430 has a side surface coated with metal films 431 and 432. A laser beam, which enters the probe 430 through an optical aperture at its one end, is converged to its front end which has a very small aperture to irradiate or heat the magnetic memory cell just below the probe 430 with laser light. Further, the metal film with which the probe 430 is coated is made in contact with the electrode 425 of this magnetic memory cell to reverse the magnetic orientation of the magnetization free layer 424 by making a current flow through the GMR element from a power supply 440. This makes possible not only heating by an incident laser beam but also current injection via the metal film 432 of the probe 430 at the same time.

The above-mentioned laser beam is irradiated by a semiconductor laser 450 to the aperture formed at the other end of the probe 430 via an object lens 451. To control the position of the probe 430, the widely known optical lever method employed in atomic force microscopy (AFM) can be used. Here, the probe 430 is formed at a cantilever 440 which is driven by a piezoelectric scanner 460. The piezoelectric scanner 460 is given a position signal 480 to access a memory cell to be touched by the probe 430. In the present invention, the cantilever 440 has a light reflector 452 formed thereon near the aperture which receives the semiconductor laser beam. The semiconductor laser beam generated in order to heat a memory cell is partly reflected by the light reflector 452 and the reflected light is detected by a 4-segment photodiode 453. The minute deflection (displacement) of the cantilever caused by atomic force between the probe 430 and the magnetic memory cell can be measured according to the change in the power of the reflected light detected by the 4-segment photodiode 453. This makes it possible to access a specific memory cell according to the height profile across an array of many memory cells. Between the photodiode 453 and the piezoelectric scanner 460, an electric feedback circuit 470 is included to perform accurate positioning control of the probe.

The magnetic memory cell structure disclosed in Fig. 5 was fabricated by following almost the same process for the aforementioned first embodiment. The substrate 410 is a semiconducting Si substrate. Its surface is oxidized by natural oxidation or plasma oxidation to form a 5 nm thick insulator film (SiO₂). Then, a metal film 420 (Au) with a uniform thickness of 10 nm was deposited on the substrate by using a typical sputtering or molecular beam epitaxy (MBE) system. Then, a 3 nm thick antiferromagnetic layer 421 (MnIr), a 10 nm thick magnetization fixed layer 422 (CoFe), a 5 nm thick non-magnetic metal layer 423 (Cu), a 2 nm thick magnetization free layer 424 (CoFe) and a 5 nm thick metal electrode 425 (Au) were formed in this order. This memory cell structure is unique in that the magnetization free layer 424 is present on the upper electrode 425 side, vertically opposite to the memory cell structure of the first embodiment. Then, micro-fabrication technology was applied to the uniformly deposited films 421-425. Namely, an electron beam lithography or ion milling system was used to form a square array of a number of 20 nm x 20 nm wide pillar memory cell structures arranged at intervals of 20 nm.

To form the probe 430, 431 and 432 used in the third embodiment, the front end of an optical fiber (SiO₂) was tapered by using a FIB (Focused Ion Beam) system and then the whole surface of the optical fiber is coated with a 5 nm thick metal film (W) through vapor deposition by using a MBE system. Further, the resulting optical fiber probe coated entirely with a metal film was processed by the FIB system to form an aperture at each of the front and rear ends by removing the metal therefrom. This probe structure can heat a memory cell and inject a current into it.

The probe 430 was attached to the cantilever 440. The light source is a semiconductor laser 450 (blue-violet, wavelength 405 nm) for use in ordinary optical magnetic recording apparatus. From the semiconductor laser 450, a laser beam was entered into the rear aperture of the probe via an object lens 451 or a SIL (Solid Immersion Lens) 451 having higher condensing performance so as to irradiate the laser beam to the memory cell via the front aperture of the probe. Further, the metal film formed to coat the optical fiber was partly made in contact with the upper electrode 425 of the memory cell. In this setup, a current was injected into a memory cell while a memory cell was heated.

To control the position of the probe, the optical lever method was used as in AFM. The light reflector 452 is provided in the vicinity of the rear aperture of the probe. The laser light to heat a memory cell is partly reflected by this reflector and converted into an electrical signal by the photodiode 453. Positioning control of the probe is done by feeding back this electrical signal through the feedback circuit 470 to help determine the voltage to drive the piezoelectric scanner 460. The thus realized magnetic recording device using spin injection with thermal assist showed substantially the same characteristics as the first embodiment.

Although in the third embodiment, both a laser beam used to heat a memory cell and a laser beam used to position the cantilever are generated by the same light source (semiconductor laser), it is also possible to use two semiconductor laser light sources. In this case, one light source heats a magnetic memory cell while the other light source is used to position the cantilever.

### (Embodiment 4)

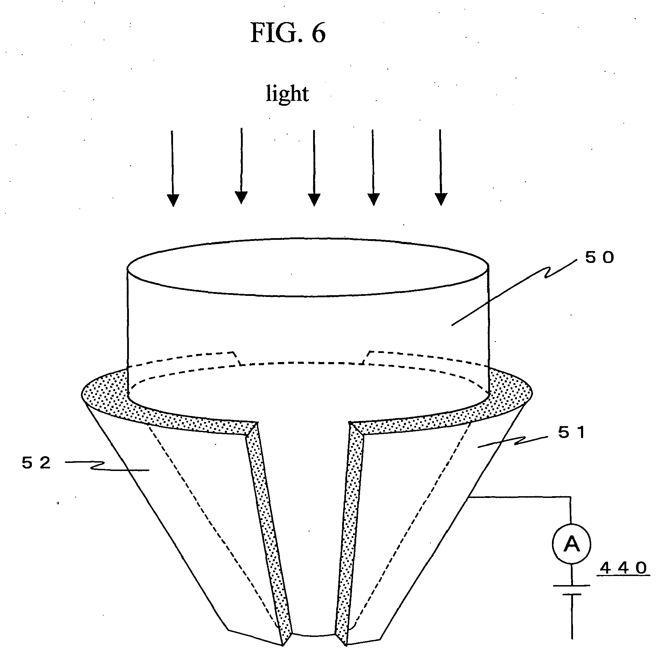

The metal film formed to coat the optical fiber of the above-mentioned probe 430 may be two metal films 51 and 52 which are electrically isolated from each other as shown in Fig. 6. This structure can more efficiently heat a memory cell due to the effect of plasma oscillation [Appl. Phys. Lett. 70, 1354(1997)] occurring in the metal films 51 and 52. That is, before output from the front aperture of the probe, the laser beam is boosted in power while it passes through the optical fiber. Here, a part of the metal film 51 or 52 is used to make contact with the electrode of a memory cell to flow a current into the memory cell.

The probe structure of the fourth embodiment was fabricated as follows. The front end of an optical fiber (SiO₂) 50 was tapered by using a FIB (Focused Ion Beam) system and then the whole surface of the optical fiber was coated with a 5 nm thick metal film (W) through vapor deposition by using a MBE system. Then, the resulting optical fiber probe coated entirely with a metal film was processed by the FIB system to form an aperture at each of the front and rear ends by removing the metal therefrom. Further, the remaining metal film was partly removed from the circumference of the optical fiber to separate the metal film into two films 51 and 52 which are electrically insulated from each other. As described with the third embodiment, part of the metal film 51 or 52 was set in contact with the upper electrode of a memory cell to carry out operation by injecting a current into the memory cell in the same manner as the third embodiment.

### (Embodiment 5)

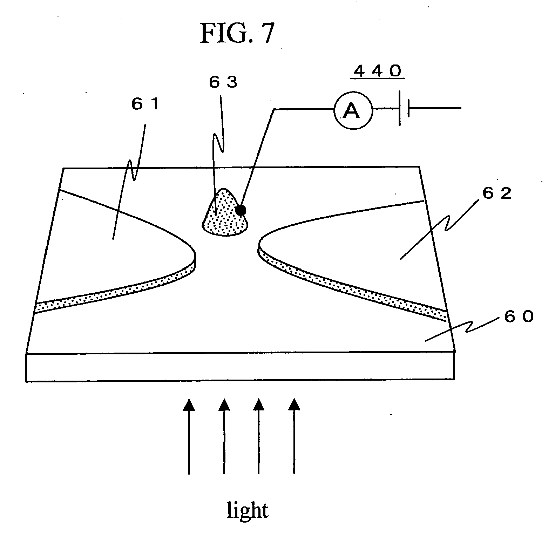

The front end of the probe's optical fiber (SiO₂) 50 must not necessarily be tapered. Instead, the probe structure may have a wide front end as shown in Fig. 7. The front end face is coated with metal films which constitute an antenna and a probe. This probe structure is obtained by forming three metal films 61, 62 and 63 on a glass substrate 60. Each metal film is electrically separated from the others. The metal films 61 and 62 constitute a bow tie-shaped antenna structure to induce the aforementioned plasma oscillation. The metal film 63 is used as an electrode to supply electricity to a magnetic memory cell.

The probe structure disclosed in Fig. 7 was fabricated as follows. A metal film (W) with a uniform thickness of 5 nm was vapor-deposited on an optically transparent plate (SiO₂) 60 by using a typical sputtering or molecular beam epitaxy (MBE) system. Then, the metal films 61 and 62, which constitute a bow tie-shaped antenna structure, and the metal probe 63 to inject a current into a memory cell were formed by using a FIB system or ion milling system. A space of 200 nm is left between the metal films 61 and 62. The metal probe 63 is 50 nm distant from the line assumed between the mutually nearest points of the metal films 61 and 62. With this probe structure attached to the AFM cantilever, operation was carried out in the same manner as the third embodiment.

### (Other Embodiment)

A number of such magnetic memory cells as shown in Fig. 1 or 5 may be arrayed in a XY plane. In this case, if plural probes are prepared which can be made in independent contact respectively with, for example, eight magnetic memory cells in the X or Y direction, higher speed write and read operations are possible by positioning the probes to one byte of magnetic memory cells at a time. In this case, it is preferable to provide each of the plural probes with a laser light source.

In a magnetic recording apparatus of the present invention, magnetization reversal by spin injection is thermally assisted. Since the current density (critical current density) required for magnetization reversal can be reduced remarkably and magnetic memory cells are easier to miniaturize and integrate, higher density magnetic recording is possible than existing ones. In addition, since the critical current density is reduced, the present invention can provide a magnetic recording apparatus which consumes less power and comprises more durable memory cells, enabling application to high density magnetic recording and magnetic random access memory.

## Claims

1. A magnetic recording apparatus which has magnetic recording elements (120-125) arranged on a substrate (110), said apparatus comprising:
means (130, 140) for heating an arbitrary part of the magnetic recording elements; and
means (150) for supplying an external current to the respective magnetic recording elements,
wherein the external current is supplied to one of the magnetic recording elements (120-125) with the same heated so that magnetic write to the respective magnetic recording elements is done independently.

2. A magnetic recording apparatus which has magnetic recording elements (320-325) formed on a substrate (310), wherein
each magnetic recording element has a trilayer stack structure composed of a first ferromagnetic layer (321), a non-magnetic layer (322), and a second ferromagnetic layer (323), and
a part of the magnetic recording elements (320-325) formed in the specified areas of the substrate (310) is heated with a laser beam incident from the back side of the substrate (310) and an external current is concurrently supplied to one of the magnetic recording elements, thereby reversing the magnetic orientation of the first ferromagnetic layer (321) of each magnetic recording element.

3. The apparatus of claim 1 or 2, wherein supplying a current to the magnetic recording element is done via a conductive metal probe (150) which is set in contact with the magnetic recording element (120-125; 320-325).

4. The apparatus of claim 2, wherein
bit lines (350; 711₁, 711₂) and word lines (360; 712₁, 712₂) are formed on the substrate (310),
each magnetic recording element (320-325) is formed where a bit line intersects with a word line, and
supplying an external current to the magnetic recording element is done via an electrode selected by the corresponding bit line and word line.

5. A magnetic recording apparatus which has magnetic recording elements (420-425) formed on a substrate (410), wherein
each magnetic recording element has a trilayer stack structure composed of a first ferromagnetic layer (424), a non-magnetic layer (423) and a second ferromagnetic layer (422),
a conductive probe (430) comprising a tapered optical element coated with a metal film (431, 432) is made in contact with the magnetic recording element,
the magnetic recording element is heated with a laser beam incident via the optical element, and
an external current is concurrently supplied to the magnetic recording element via the metal film (431, 432) which coats the optical element, thereby reversing the magnetic orientation of the first ferromagnetic layer (424) of each magnetic recording element.

6. The apparatus of claim 5, wherein
the metal film (431, 432) which coats the optical element (50) is composed of two mutually facing metal films (51, 52) which are formed on the optical element so as to be electrically isolated from each other, and
current is supplied to only one (51) of the two films (51, 52).

7. The apparatus of claim 5, wherein
the conductive probe has a wide front end face on which two mutually facing isolated metal films (61, 62) functioning as an antenna are formed,
an isolated third metal film (63) is formed near to both the two mutually facing isolated metal films (61, 62), and
supplying a current to the magnetic recording element is done via the third metal film (63).

8. The apparatus of claim 2 or 5, wherein
the magnetic recording elements (320-325; 420-425) are arranged like a XY matrix,
plural probes each identical to said probe are provided,
the plural probes can be made in contact respectively with plural magnetic recording elements in the X or Y direction, and
the plural probes can be positioned respectively to plural magnetic recording elements at a time.

9. The apparatus of claim 8, wherein each of the plural probes receives a laser beam from a separate light source (450).

10. The apparatus of claim 2 or 5, wherein the stack structure is formed on the substrate (310; 410) so that of the three layers, the ferromagnetic layer (321; 424) whose magnetic orientation is to be reversed by a current is nearest to the laser beam source (330; 450) which irradiates the magnetic recording element.

11. The apparatus of claim 2 or 5, wherein an antiferromagnetic layer (324; 421) is added in contact with the ferromagnetic layer (323; 422) which is included in the stack structure, the magnetic orientation of the ferromagnetic layer (323; 422) being to be fixed.

12. The apparatus of any preceding claim, wherein the magnetic recording element (120-125; 320-325; 420-425) is heated to a temperature lower than the Curie temperature of the ferromagnetic material constituting the magnetic recording element.
